# FASCICULE DE BREVET EUROPEEN

(11) **EP 4 031 417 B1**
(45) Date de publication et mention de la délivrance du brevet: **03.01.2024**
(21) Numéro de dépôt: 20820267.1
(22) Date de dépôt: 18.09.2020
(51) Int. Cl.: B60R 13/08, B60R 21/34

(54) **ECRAN DE PROTECTION ACOUSTIQUE POUR MOTEUR DE VÉHICULE AUTOMOBILE**
AKUSTISCHE ABSCHIRMUNG FÜR EINEN KRAFTFAHRZEUGMOTOR
ACOUSTIC SHIELD FOR MOTOR VEHICLE ENGINE

(30) Priorité: 18.09.2019 FR 1910293
(43) Date de publication de la demande: 27.07.2022
(73) Titulaire: NOVARES France, 78140 Vélizy-Villacoublay (FR)
(72) Inventeur: JEAN, Thomas, 62150 HOUDAIN (FR); DARCEL, Daniel, 75015 PARIS (FR)
(74) Mandataire: Germain Maureau
(86) Numéro de dépôt international: PCT/FR2020/051627
(87) Numéro de publication internationale: WO 2021/053308

(56) Documents cités:
- EP-A1- 1 925 511
- EP-B1- 2 089 251
- WO-A1-2018/042094
- FR-A1- 2 852 901
- FR-A1- 2 979 086
- US-A1- 2006 073 310
- US-A1- 2010 143 661

## Description

L'invention concerne un écran de protection acoustique pour moteur de véhicule automobile, ainsi qu'un ensemble comprenant un moteur pourvu d'un tel écran et un procédé de fabrication d'un tel écran.

Les écrans de protection acoustique pour moteur de véhicule automobile sont destinés à recouvrir la partie supérieure du moteur. Ils remplissent plusieurs fonctions. Une première fonction est leur fonction esthétique. Ils cachent en effet le moteur à la vue des utilisateurs. Une deuxième fonction est leur fonction acoustique. En effet, une couche de matériau absorbant acoustique est généralement intégrée dans lesdits écrans et permet d'atténuer les bruits générés par le moteur. Une troisième fonction est leur fonction de protection. En particulier, lors d'un choc avec un piéton, il peut arriver que la tête du piéton vienne heurter le capot dans une zone située juste au-dessus de l'écran. L'écran permet ainsi de protéger le moteur lors de l'impact, mais surtout d'amortir l'impact et, de ce fait, de protéger le piéton.

Une configuration connue de ce type d'écran a notamment été décrite dans la demande de brevet WO 2018/042094. Dans cette demande de brevet, l'écran de protection est formé totalement en mousse de polyuréthanne. Il est relié au moteur par un dispositif d'accouplement par emboîtement. Ce dispositif est constitué d'un plot et d'un pion de montage. Le pion de montage est fixé sur la partie supérieure du moteur de façon à être orienté verticalement et vers le haut. L'écran de protection comporte sur sa face interne un plot creux qui s'emboîte sur le pion de montage et maintient en place l'écran.

Ce type d'écran présente toutefois l'inconvénient d'être fragile du fait de leur matériau constitutif uniquement en mousse. Par ailleurs, ce matériau en mousse ne permet pas d'assurer une fixation robuste du plot creux sur l'écran. En outre, il est généralement difficile d'apposer une inscription ou une couche de peinture sur ce matériau en mousse : l'esthétisme de l'écran s'en trouve donc amoindri.

Un autre type d'écran connu décrit dans le brevet FR 2 979 086, correspondant au préambule de la revendication 1, combine l'utilisation d'un cadre en matériau plastique entourant une couche de matériau absorbant acoustique. Toutefois, dans ce brevet, le cadre en matériau plastique s'étendant uniquement à la périphérie de la couche de matériau absorbant acoustique, il est toujours difficile d'appliquer un décor sur la partie apparente de l'écran. En outre, ce type d'écran nécessite la mise en oeuvre d'un procédé de fabrication relativement complexe du fait de la structure non-homogène de la couche de matériau absorbant acoustique, laquelle présente deux zones de densité différente.

D'autres exemples d'écrans de protection acoustique ont été décrits dans les documents EP 2 089 251 B1, US 2006/073310 A1 et FR 2 852 901 A1.

La présente invention a pour objet de proposer un écran de protection acoustique ne présentant pas les inconvénients de l'art antérieur cité précédemment.

Dans ce but, l'invention propose un écran de protection acoustique pour moteur de véhicule automobile comprenant les caractéristiques de la revendication 1.

Ainsi configuré, l'écran de protection de l'invention possède à la fois une rigidité accrue, du fait de l'utilisation d'un matériau plastique, et une meilleure souplesse, notamment au niveau d'une zone supérieure centrale, lui permettant d'absorber plus efficacement les chocs lors d'un choc piéton. Il présente en outre l'avantage d'être facile à réaliser.

L'écran de protection de l'invention pourra également comprendre une ou plusieurs des caractéristiques suivantes :
- la deuxième partie est surmoulée sur la première partie et la troisième partie.
- la première partie comprend deux rebords latéraux à profil courbe, chacun des rebords latéraux comprenant un segment principal jouxtant l'ouverture centrale et un premier segment d'extrémité jouxtant le segment principal et orienté perpendiculairement à celui-ci, ledit premier segment d'extrémité formant un bord périphérique de l'écran.

- chacun des rebords latéraux comprend également un deuxième segment d'extrémité orienté perpendiculairement au segment principal, ledit deuxième segment d'extrémité étant configuré pour former un logement pour un pion fixé sur le moteur, permettant ainsi la fixation de l'écran sur le moteur.
- le deuxième segment d'extrémité possède une forme sensiblement cylindrique.
- la première partie est en matériau polyamide.
- la deuxième partie est à base de mousse de polyuréthanne.
- la mousse de polyuréthanne possède une masse volumique comprise entre 70 et 200 kg/m3.
- la troisième partie est en fibres de verre.
- le matériau fibreux possède une masse surfacique comprise entre 400 et 1000 g/m2.
- la première partie comporte des ergots saillant au niveau de l'ouverture centrale, lesdits ergots étant configurés pour maintenir en position la troisième partie à l'intérieur de l'ouverture centrale.

L'invention concerne également un ensemble comprenant un moteur pourvu d'un écran tel que défini ci-dessus, dans lequel les moyens de fixation de l'écran coopèrent avec des moyens de fixation complémentaires solidaires du moteur de manière à assurer la fixation dudit écran sur ledit moteur.

Dans une configuration particulière de l'invention, les moyens de fixation de l'écran comprennent au moins un plot présentant un logement destiné à recevoir en emboîtement un pion solidaire du moteur.

Dans une autre configuration particulière de l'invention, une partie chaude du moteur est recouverte par au moins une zone d'extrémité de la première partie de l'écran.

L'invention concerne également un procédé de fabrication d'un écran de protection acoustique tel que défini ci-dessus, ledit procédé comprenant les étapes suivantes :
a) Formation par injection plastique de la première partie;
b) Formation par thermocompression de la troisième partie;
c) Transfert de la première partie dans une matrice inférieure d'un moule;
d) Positionnement de la troisième partie à l'intérieur de l'ouverture centrale de la première partie;
e) Coulée d'un matériau absorbant acoustique dans la matrice inférieure du moule de manière à recouvrir la première partie et la troisième partie;
f) Fermeture du moule formé de la matrice inférieure susmentionnée et d'une matrice supérieure possédant une géométrie complémentaire de celle de la deuxième partie;
g) Expansion du matériau absorbant acoustique de manière à former la deuxième partie;
h) Démoulage de l'écran.

Dans une configuration particulière de l'invention, l'étape e) est remplacée par une étape f'), succédant à l'étape f) et effectuée préalablement à l'étape g), au cours de laquelle le matériau absorbant acoustique est injecté dans le moule formé par les matrices inférieure et supérieure.

L'invention sera mieux comprise à la lecture de la description qui va suivre, donnée uniquement à titre d'exemple non limitatif et fait en référence aux dessins sur lesquels :
[Fig. 1] est une vue schématique en coupe d'un ensemble comprenant un moteur pourvu d'un écran de protection selon un mode de réalisation de l'invention ;
[Fig. 2a] illustre de manière schématique une première étape d'un procédé de fabrication permettant de réaliser un écran de protection selon l'invention ;
[Fig. 2b] illustre de manière schématique une deuxième étape d'un procédé de fabrication permettant de réaliser un écran de protection selon l'invention ;
[Fig. 2c] illustre de manière schématique une troisième étape d'un procédé de fabrication permettant de réaliser un écran de protection selon l'invention ;
[Fig. 2d] illustre de manière schématique une quatrième étape d'un procédé de fabrication permettant de réaliser un écran de protection selon l'invention ;
[Fig. 2e] illustre de manière schématique une cinquième étape d'un procédé de fabrication permettant de réaliser un écran de protection selon l'invention ;
[Fig. 2f] illustre de manière schématique une sixième étape d'un procédé de fabrication permettant de réaliser un écran de protection selon l'invention ;
[Fig. 2g] illustre de manière schématique une septième étape d'un procédé de fabrication permettant de réaliser un écran de protection selon l'invention ;
[Fig. 2h] illustre de manière schématique une huitième étape d'un procédé de fabrication permettant de réaliser un écran de protection selon l'invention ;
[Fig. 3] est un diagramme illustrant les variations du gain acoustique (exprimé en dB) en fonction de la fréquence (exprimée en Hz) d'une onde acoustique traversant un écran de protection selon l'invention et, en comparaison, celles obtenues lorsque la même onde acoustique traverse un écran de protection conventionnel.

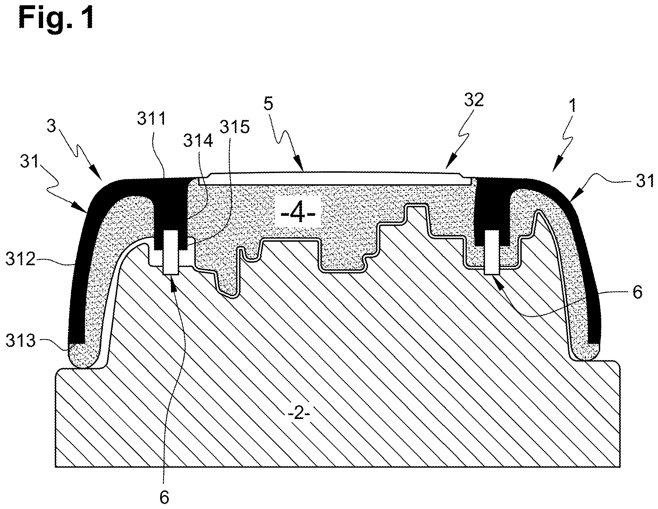

En référence à la figure 1, un écran 1 de protection acoustique est disposé sur un moteur 2 de véhicule automobile et sous un capot (non représenté). L'écran 1 comprend une première partie 3 en matériau plastique, notamment en polyamide, et une deuxième partie 4 en un matériau absorbant acoustique. La première partie 3 recouvre la deuxième partie 4 de manière à la masquer au moins partiellement. Elle possède en outre une ouverture centrale 32 servant de logement à une troisième partie 5, ladite troisième partie 5 étant formée dans un matériau déformable permettant d'absorber efficacement les chocs transmis par le capot du véhicule automobile. Un tel matériau déformable sera un matériau fibreux, de préférence à base de fibres de verre, de masse surfacique comprise entre 400 et 1000 g/m².

La première partie 3 comprend deux rebords latéraux 31 à profil courbe. Chacun des rebords latéraux 31 comprend un segment principal 311 jouxtant l'ouverture centrale 32 et un premier segment d'extrémité 312 jouxtant le segment principal 311 et orienté perpendiculairement à celui-ci, ledit premier segment d'extrémité 312 formant un bord périphérique de l'écran 1. A son extrémité libre 313, le segment d'extrémité 312 jouxte, sans le toucher, le moteur 2. L'espace séparant le segment principal 311 et le premier segment d'extrémité 312 du moteur 2 est intégralement ou quasi-intégralement occupé par la deuxième partie 4. Chacun des rebords latéraux 31 comprend également un deuxième segment d'extrémité 314 orienté perpendiculairement au segment principal 311, ledit deuxième segment d'extrémité 314 possédant une forme sensiblement cylindrique et s'étendant depuis le segment principal 311 vers le bas en direction du moteur 2. Il traverse de part en part la deuxième partie 4. Son extrémité libre 315 est configurée pour former un logement pour un pion 6 fixé sur le moteur 2, permettant ainsi la fixation de l'écran 1 sur le moteur 2. Dans une configuration particulière de l'invention, ladite extrémité libre 315 recevra un plot creux dans lequel viendra s'emboîter le pion 6. Dans une autre configuration particulière de l'invention, la première partie 3 pourra comprendre au moins une zone d'extrémité destinée à venir recouvrir une partie chaude du moteur 2. Cette zone d'extrémité pourra par exemple former une extension d'un des rebords latéraux 31.

La deuxième partie 4 présente sur sa face inférieure 41, qui est en contact avec le moteur 2, un profil sensiblement complémentaire à celui de la face supérieure du moteur 2. Elle occupe l'intégralité ou quasiment l'intégralité de l'espace séparant les première et troisième parties 3, 5 du moteur 2. Elle est constituée de préférence d'un matériau en mousse de polyuréthanne de masse volumique comprise entre 70 et 200 kg/m³.

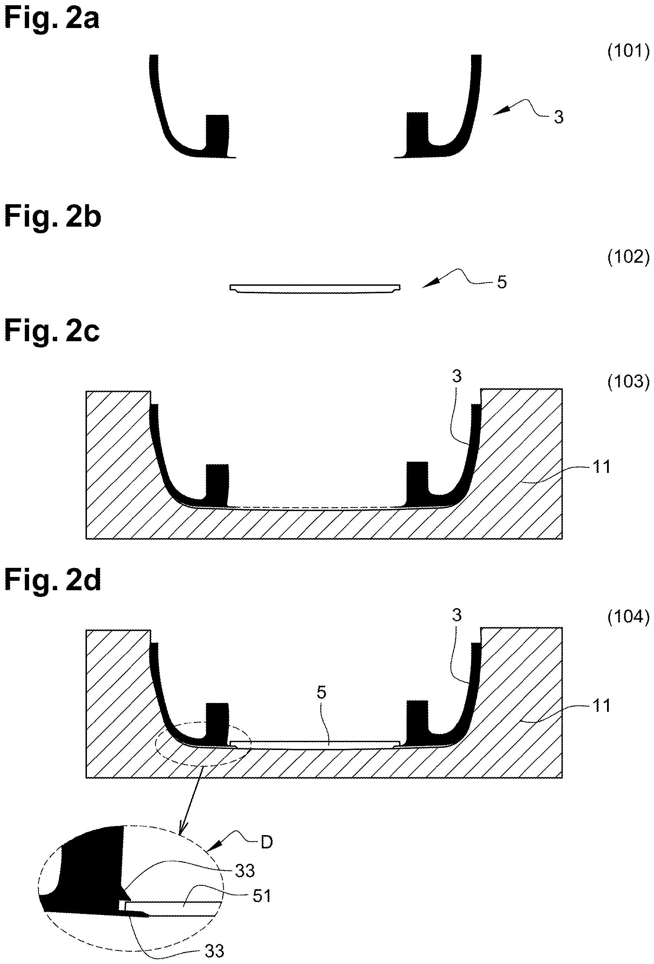

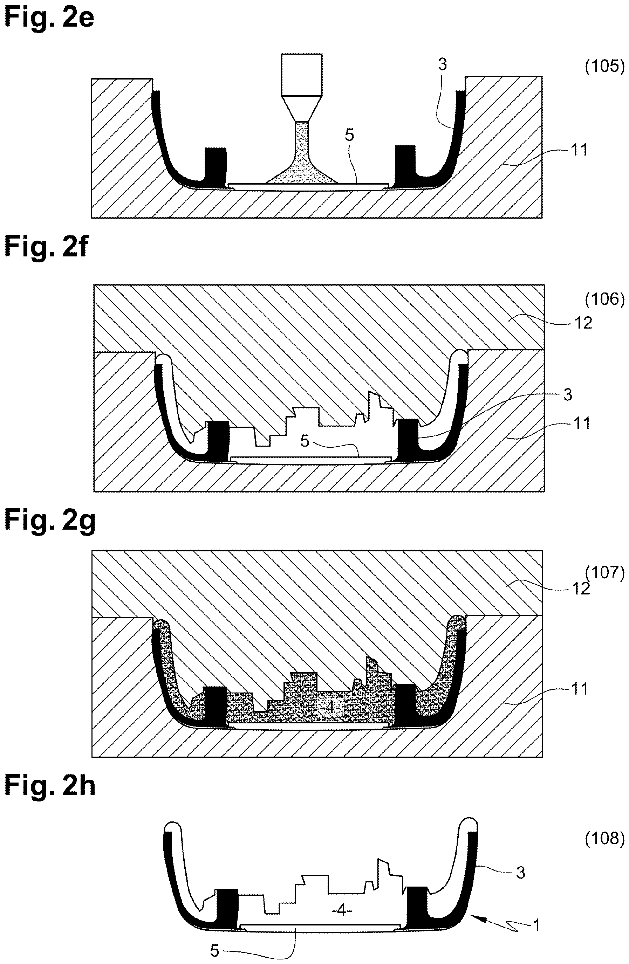

En référence aux figures 2a à 2h, les différentes étapes d'un procédé de fabrication d'un écran 1 conforme à celui illustré sur la figure 1 sont représentées. Ce procédé comprend notamment :
- une première étape 101 au cours de laquelle la première partie 3 est formée par injection plastique.
- une deuxième étape 102 au cours de laquelle la troisième partie 5 est formée par thermocompression.
- une troisième étape 103 au cours de laquelle la première partie 3 est transférée dans une matrice inférieure 11 d'un moule.
- une quatrième étape 104 au cours de laquelle la troisième partie 5 est positionnée à l'intérieur de l'ouverture centrale 32 de la première partie 3. Comme représenté sur le détail D, cette étape pourra être facilitée dans le cas où la première partie 3 comporte des ergots 33 saillant au niveau de l'ouverture centrale 32, lesdits ergots 33 étant configurés pour loger les extrémités latérales 51 de la troisième partie 5 de telle sorte à maintenir en position ladite troisième partie 5 à l'intérieur de l'ouverture centrale 32. Dans une variante du procédé, les étapes 103 et 104 pourront être inversées.
- une cinquième étape 105 au cours de laquelle un matériau absorbant acoustique est coulé dans la matrice inférieure 11 du moule de manière à recouvrir la première partie 3 et la troisième partie 5.
- une sixième étape 106 au cours de laquelle le moule est fermé, ledit moule étant formé de la matrice inférieure 11 susmentionnée et d'une matrice supérieure 12 possédant une géométrie complémentaire de celle du moteur 2.
- une septième étape 107 au cours de laquelle le matériau absorbant acoustique subit une expansion, notamment sous l'effet de la chaleur, de telle sorte à remplir totalement l'espace libre à l'intérieur du moule 10. La deuxième partie 4 est ainsi surmoulée sur la première partie 3 et la troisième partie 5.
- une huitième étape 108 au cours de laquelle le moule 10 est ouvert et l'écran 1 ainsi formé est démoulé.

D'autres étapes additionnelles pourront être prévues. En particulier, l'étape 108 pourra être suivie d'une étape consistant à assembler des plots creux aux extrémités libres 315 des deuxièmes segments d'extrémité 314 et/ou une étape de formation d'un décor sur la face supérieure de l'écran 1.

Par ailleurs, la sixième étape 106 pourra être remplacée par une étape intermédiaire, effectuée postérieurement à l'étape 107 et préalablement à l'étape 108, au cours de laquelle le matériau absorbant acoustique est injecté dans le moule formé par les matrices inférieure et supérieure 11, 12.

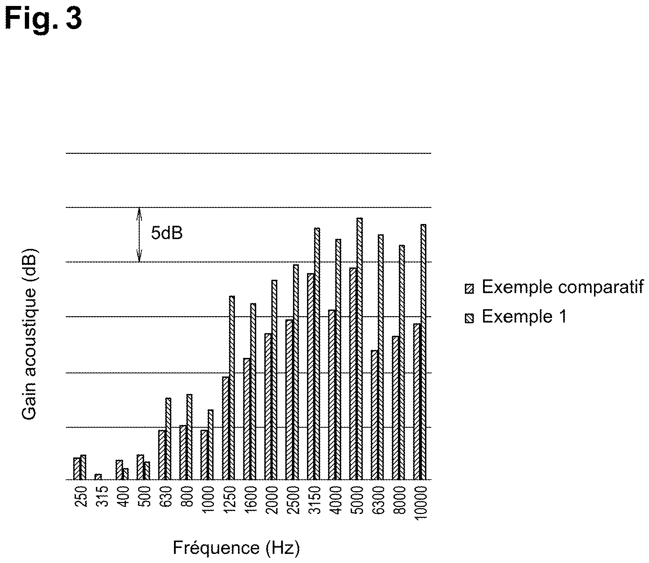

En référence à la figure 3, il est représenté un diagramme montrant les variations du gain acoustique (exprimé en dB) en fonction de la fréquence (exprimée en Hz) d'une onde acoustique traversant un écran de protection selon l'invention (exemple 1) et, en comparaison, celles obtenues lorsque la même onde acoustique traverse un écran de protection conventionnel (exemple comparatif), formé d'un cadre en matière plastique à l'intérieur duquel est emprisonné un matériau absorbant acoustique à base de fibres, tel que décrit par exemple dans la demande de brevet FR 2 979 086. Ce diagramme permet notamment d'observer que, dans les gammes de fréquence comprises entre 1600 et 8000 Hz, le gain acoustique de l'écran selon l'invention est supérieur d'au moins 5 dB à celui de l'écran conventionnel. Dans les gammes de fréquences comprises entre 630 et 1000 Hz, le gain acoustique de l'écran selon l'invention reste supérieur à celui de l'écran conventionnel mais la différence entre les deux gains est, dans ce cas, inférieure à 5 dB. L'écran de protection de l'invention présente donc l'avantage supplémentaire d'atténuer de manière plus efficace les bruits générés par le moteur.

## Revendications

1. Ecran (1) de protection acoustique pour moteur (2) de véhicule automobile comprenant :
- une première partie (3) constituée d'un matériau plastique, ladite première partie (3) comportant des moyens de fixation de l'écran (1) sur un moteur (2) de véhicule automobile,
- une deuxième partie (4) constituée au moins partiellement d'un matériau absorbant acoustique, ladite deuxième partie (4) étant destinée à venir au contact du moteur (2),
dans lequel la première partie (3) recouvre la deuxième partie (4) de manière à la masquer au moins partiellement, **caractérisé en ce que** la première partie (3) présente une ouverture centrale (32) servant de logement à une troisième partie (5), ladite troisième partie (5) étant formée dans un matériau déformable permettant d'absorber les chocs transmis par le capot du véhicule automobile lors d'un choc piéton, ledit matériau déformable étant un matériau fibreux.

2. Ecran (1) selon la revendication 1, **caractérisé en ce que** la deuxième partie (4) est surmoulée sur la première partie (3) et la troisième partie (5).

3. Ecran (1) selon l'une des revendications précédentes, **caractérisé en ce que** la première partie (3) comprend deux rebords latéraux (31) à profil courbe, chacun des rebords latéraux (31) comprenant un segment principal (311) jouxtant l'ouverture centrale (32) et un premier segment d'extrémité (312) jouxtant le segment principal (311) et orienté perpendiculairement à celui-ci, ledit premier segment d'extrémité (312) formant un bord périphérique de l'écran (1).

4. Ecran (1) selon la revendication 3, **caractérisé en ce que** chacun des rebords latéraux (31) comprend également un deuxième segment d'extrémité (314) orienté perpendiculairement au segment principal (311), ledit deuxième segment d'extrémité (314) étant configuré pour former un logement pour un pion (6) fixé sur le moteur (2), permettant ainsi la fixation de l'écran (1) sur le moteur (2).

5. Ecran (1) selon la revendication 4, **caractérisé en ce que** le deuxième segment d'extrémité (314) possède une forme sensiblement cylindrique.

6. Ecran (1) selon l'une des revendications précédentes, **caractérisé en ce que** la première partie (3) est en matériau polyamide.

7. Ecran (1) selon l'une des revendications précédentes, **caractérisé en ce que** la deuxième partie (4) est à base de mousse de polyuréthanne.

8. Ecran (1) selon la revendication 7, **caractérisé en ce que** la mousse de polyuréthanne possède une masse volumique comprise entre 70 et 200 kg/m³.

9. Ecran (1) selon l'une des revendications précédentes, **caractérisé en ce que** la troisième partie (5) est en fibres de verre.

10. Ecran (1) selon l'une des revendications précédentes, **caractérisé en ce que** le matériau fibreux possède une masse surfacique comprise entre 400 et 1000 g/m2.

11. Ecran (1) selon l'une des revendications précédentes, **caractérisé en ce que** la première partie (3) comporte des ergots (33) saillant au niveau de l'ouverture centrale (32), lesdits ergots (33) étant configurés pour maintenir en position la troisième partie (5) à l'intérieur de l'ouverture centrale (32).

12. Ensemble comprenant un moteur (2) pourvu d'un écran (1) selon l'une des revendications précédentes, **caractérisé en ce que** les moyens de fixation de l'écran (1) coopèrent avec des moyens de fixation complémentaires (6) solidaires du moteur (2) de manière à assurer la fixation dudit écran sur ledit moteur.

13. Ensemble selon la revendication 12, **caractérisé en ce que** les moyens de fixation de l'écran comprennent au moins un plot présentant un logement destiné à recevoir en emboîtement un pion (6) solidaire du moteur.

14. Ensemble selon la revendication 12 ou 13, **caractérisé en ce qu'**une partie chaude du moteur est recouverte par au moins une zone d'extrémité de la première partie (3) de l'écran (1).

15. Procédé de fabrication d'un écran (1) de protection acoustique selon l'une des revendications 1 à 11, **caractérisé en ce qu'**il comprend les étapes suivantes :
a) Formation (101) par injection plastique de la première partie (3) ;
b) Formation (102) par thermocompression de la troisième partie (5) ;
c) Transfert (103) de la première partie (3) dans une matrice inférieure (11) d'un moule ;
d) Positionnement (104) de la troisième partie (5) à l'intérieur de l'ouverture centrale (32) de la première partie (3) ;
e) Coulée (105) d'un matériau absorbant acoustique dans la matrice inférieure (11) du moule de manière à recouvrir la première partie (3) et la troisième partie (5);
f) Fermeture (106) du moule formé de la matrice inférieure (11) susmentionnée et d'une matrice supérieure (12) possédant une géométrie complémentaire de celle de la deuxième partie (4) ;
g) Expansion (107) du matériau absorbant acoustique de manière à former la deuxième partie (4) ;
h) Démoulage (108) de l'écran (1).

16. Procédé selon la revendication 15, **caractérisé en ce que** l'étape e) est remplacée par une étape f'), succédant à l'étape f) et effectuée préalablement à l'étape g), au cours de laquelle le matériau absorbant acoustique est injecté dans le moule formé par les matrices inférieure et supérieure (11, 12).

## Patentansprüche

1. Akustische Abschirmung (1) für einen Motor (2) eines Kraftfahrzeugs, Folgendes beinhaltend:
- einen ersten Teil (3), der aus einem Kunststoffmaterial besteht, wobei der erste Teil (3) Mittel zum Befestigen der Abschirmung (1) an einem Motor (2) eines Kraftfahrzeugs beinhaltet,
- einen zweiten Teil (4), der mindestens teilweise aus einem akustisch absorbierenden Material besteht, wobei der zweite Teil (4) dazu bestimmt ist, mit dem Motor (2) in Kontakt zu treten,
wobei der erste Teil (3) den zweiten Teil (4) abdeckt, um ihn mindestens teilweise zu verbergen, **dadurch gekennzeichnet, dass** der erste Teil (3) eine zentrale Öffnung (32) aufweist, die als Aufnahme für einen dritten Teil (5) dient, wobei der dritte Teil (5) aus einem verformbaren Material gebildet ist, das es ermöglicht, die Aufpralle, die von der Motorhaube des Kraftfahrzeugs bei einem Aufprall eines Fußgängers übertragen werden, zu absorbieren, wobei das verformbare Material ein faseriges Material ist.

2. Abschirmung (1) nach Anspruch 1, **dadurch gekennzeichnet, dass** der zweite Teil (4) an dem ersten Teil (3) und dem dritten Teil (5) angeformt ist.

3. Abschirmung (1) nach einem der vorstehenden Ansprüche, **dadurch gekennzeichnet, dass** der erste Teil (3) zwei Seitenränder (31) mit gekrümmtem Profil umfasst, wobei jeder der Seitenränder (31) ein Hauptsegment (311) umfasst, welches an die zentrale Öffnung (32) angrenzt, und ein erstes Abschlusssegment (312), welches an das Hauptsegment (311) angrenzt, und senkrecht dazu ausgerichtet ist, wobei das erste Abschlusssegment (312) einen umfänglichen Rand der Abschirmung (1) bildet.

4. Abschirmung (1) nach Anspruch 3, **dadurch gekennzeichnet, dass** jeder der Seitenränder (31) auch ein zweites Abschlusssegment (314) umfasst, das senkrecht zum Hauptsegment (311) ausgerichtet ist, wobei das zweite Abschlusssegment (314) konfiguriert ist, um eine Aufnahme für einen Stift (6) zu bilden, der am Motor (2) befestigt ist, wodurch die Befestigung der Abschirmung (1) am Motor (2) ermöglicht wird.

5. Abschirmung (1) nach Anspruch 4, **dadurch gekennzeichnet, dass** das zweite Abschlusssegment (314) eine im Wesentlichen zylindrische Form besitzt.

6. Abschirmung (1) nach einem der vorstehenden Ansprüche, **dadurch gekennzeichnet, dass** der erste Teil (3) aus Polyamid-Material ist.

7. Abschirmung (1) nach einem der vorstehenden Ansprüche, **dadurch gekennzeichnet, dass** der zweite Teil (4) auf Basis von Polyurethanschaumstoff ist.

8. Abschirmung (1) nach Anspruch 7, **dadurch gekennzeichnet, dass** der Polyurethanschaumstoff ein Volumengewicht besitzt, welches zwischen 70 und 200 kg/m³ liegt.

9. Abschirmung (1) nach einem der vorstehenden Ansprüche, **dadurch gekennzeichnet, dass** der dritte Teil (5) aus Glasfaser ist.

10. Abschirmung (1) nach einem der vorstehenden Ansprüche, **dadurch gekennzeichnet, dass** das faserige Material ein flächenbezogenes Gewicht besitzt, welches zwischen 400 und 1000 g/m² liegt.

11. Abschirmung (1) nach einem der vorstehenden Ansprüche, **dadurch gekennzeichnet, dass** der erste Teil (3) Zapfen (33) beinhaltet, die im Bereich der zentralen Öffnung (32) hervorstehen, wobei die Zapfen (33) konfiguriert sind, um den dritten Teil (5) im Inneren der zentralen Öffnung (32) in Position zu halten.

12. Einheit, umfassend einen Motor (2), der mit einer Abschirmung (1) nach einem der vorstehenden Ansprüche versehen ist, **dadurch gekennzeichnet, dass** die Mittel zum Befestigen der Abschirmung (1) mit ergänzenden Befestigungsmitteln (6) zusammenwirken, die fest mit dem Motor (2) verbunden sind, um für die Befestigung der Abschirmung am Motor zu sorgen.

13. Einheit nach Anspruch 12, **dadurch gekennzeichnet, dass** die Mittel zum Befestigen der Abschirmung mindestens einen Stützpunkt umfassen, der eine Aufnahme aufweist, die dazu bestimmt ist, durch Aufstecken einen Stift (6) aufzunehmen, der fest mit dem Motor verbunden ist.

14. Einheit nach Anspruch 12 oder 13, **dadurch gekennzeichnet, dass** ein heißer Teil des Motors durch mindestens einen Abschlussbereich des ersten Teils (3) der Abschirmung (1) abgedeckt ist.

15. Verfahren zur Herstellung einer akustischen Abschirmung (1) nach einem der Ansprüche 1 bis 11, **dadurch gekennzeichnet, dass** es die folgenden Schritte umfasst:
a) Bilden (100) durch Kunststoffinjektion des ersten Teils (3);
b) Bilden (102) durch Thermokompression des dritten Teils (5);
c) Übertragen (103) des ersten Teils (3) in eine untere Matrix (11) einer Form;
d) Positionieren (104) des dritten Teils (5) im Inneren der zentralen Öffnung (32) des ersten Teils (3);
e) Gießen (105) eines akustisch absorbierenden Materials in die untere Matrix (11) der Form, um den ersten Teil (3) und den dritten Teil (5) abzudecken;
f) Schließen (106) der Form, die aus der zuvor genannten unteren Matrix (11) und einer oberen Matrix (12) gebildet ist, die eine ergänzende Geometrie zu jener des zweiten Teils (4) besitzt;
g) Expandieren (107) des akustisch absorbierenden Materials, um den zweiten Teil (4) zu bilden;
h) Ausformen (108) der Abschirmung (1).

16. Verfahren nach Anspruch 15, **dadurch gekennzeichnet, dass** der Schritt e) durch einen Schritt f') ersetzt wird, der auf den Schritt f) folgt, und vor dem Schritt g) ausgeführt wird, im Laufe dessen das akustisch absorbierende Material in die Form, die durch die untere und obere Matrix (11, 12) gebildet wird, injiziert wird.

## Claims

1. An acoustic protection screen (1) for motor vehicle engine (2), comprising:
- a first part (3) made of a plastic material, said first part (3) including means for fixing the screen (1) to a motor vehicle engine (2),
- a second part (4) consisting at least partially of an acoustic absorbing material, said second part (4) being intended to come into contact with the engine (2),
in which the first part (3) covers the second part (4) so as to mask it at least partially, **characterized in that** the first part (3) has a central opening (32) serving as housing for a third part (5), said third part (5) being formed in a deformable material making it possible to absorb the shocks transmitted by the cowl of the motor vehicle during a pedestrian impact, said deformable material being a fibrous material.

2. The screen (1) according to claim 1, **characterized in that** the second part (4) is overmolded on the first part (3) and the third part (5).

3. The screen (1) according to any of the preceding claims, **characterized in that** the first part (3) comprises two lateral edges (31) with a curved profile, each of the lateral edges (31) comprising a main segment (311) adjoining the central opening (32) and a first end segment (312) adjoining the main segment (311) and oriented perpendicular thereto, said first end segment (312) forming a peripheral edge of the screen (1).

4. The screen (1) according to claim 3, **characterized in that** each of the lateral edges (31) also comprises a second end segment (314) oriented perpendicular to the main segment (311), said second end segment (314) being configured to form a housing for a pin (6) fixed on the engine (2), thus allowing the fixing of the screen (1) to the engine (2).

5. The screen (1) according to claim 4, **characterized in that** the second end segment (314) has a substantially cylindrical shape.

6. The screen (1) according to any of the preceding claims, **characterized in that** the first part (3) is made of polyamide material.

7. The screen (1) according to any of the preceding claims, **characterized in that** the second part (4) is polyurethane foam-based.

8. The screen (1) according to claim 7, **characterized in that** the polyurethane foam has a density comprised between 70 and 200 kg/m³.

9. The screen (1) according to any of the preceding claims, **characterized in that** the third part (5) is made of glass fibers.

10. The screen (1) according to any of the preceding claims, **characterized in that** the fibrous material has a surface mass comprised between 400 and 1000 g/m².

11. The screen (1) according to any of the preceding claims, **characterized in that** the first part (3) includes lugs (33) projecting at the level of the central opening (32), said lugs (33) being configured to hold the third part (5) in position inside the central opening (32).

12. An assembly comprising an engine (2) provided with a screen (1) according to any of the preceding claims, **characterized in that** the means for fixing the screen (1) cooperate with complementary fixing means (6) secured to the engine (2) so as to ensure the fixing of said screen on said engine.

13. The assembly according to claim 12, **characterized in that** the means for fixing the screen comprise at least one stud having a housing intended to receive by form fitting a pin (6) secured to the engine.

14. The assembly according to claim 12 or 13, **characterized in that** a hot part of the engine is covered by at least one end zone of the first part (3) of the screen (1).

15. A method for manufacturing an acoustic protection screen (1) according to any of claims 1 to 11, **characterized in that** it comprises the following steps:
a) Forming (101) by plastic injection of the first part (3);
b) Forming (102) by thermocompression of the third part (5);
c) Transferring (103) the first part (3) into a lower die (11) of a mold;
d) Positioning (104) the third part (5) inside the central opening (32) of the first part (3);
e) Casting (105) an acoustic absorbing material in the lower die (11) of the mold so as to cover the first part (3) and the third part (5):
f) Closing (106) the mold formed of the aforementioned lower die (11) and an upper die (12) having a geometry complementary to that of the second part (4);
g) Expanding (107) the acoustic absorbing material so as to form the second part (4);
h) Unmolding (108) the screen (1).

16. The method according to claim 15, **characterized in that** step e) is replaced by a step f'), succeeding step f) and carried out before step g), during which the acoustic absorbing material is injected into the mold formed by the lower and upper dies (11, 12).
